Europäisches Patentamt

(19) European Patent Office

Office européen des brevets

(11) Publication number: **0 027 378**

**A1**

(12) **EUROPEAN PATENT APPLICATION**

(21) Application number: **80303603.7**

(22) Date of filing: **13.10.80**

(51) Int. Cl.³: **C 09 D 5/40**
**C 25 D 13/06**

(30) Priority: **16.10.79 US 85199**

(43) Date of publication of application:
**22.04.81 Bulletin 81/16**

(84) Designated Contracting States:
**BE DE FR GB IT NL SE**

(71) Applicant: **DeSOTO, INC.**
**1700 South Mt. Prospect Road**
**Des Plaines Illinois 60018(US)**

(72) Inventor: **Sekmakas, Kazys**
**203 North Flake Drive**
**Palatine Illinois 60067(US)**

(72) Inventor: **Shah, Raj**
**1335 Concordia Lane**
**Schaumburg Illinois 60172(US)**

(74) Representative: **Robinson, Anthony John**
**Metcalf et al,**
**Kilburn & Strode 30 John Street**
**London, WC1N 2DD(GB)**

(54) Coating composition for cationic electrocoating from aqueous bath and bath for same.

㊼ A coating composition for electrocoating from an aqueous bath, the composition comprising a cationic amine-functional copolymer mixture and an aminoplast resin. The copolymer includes from 3% to 35% of a monomer having a basic amino group, from 20% to 35% of isobutoxymethyl acrylamide or methacrylamide and up to 15% of a monomer providing active hydrogen atoms coreactive with N-methylol functionality, the balance being nonreactive monomers.

Croydon Printing Company Ltd

condensates provide somewhat better properties in the cured films, but these are far more expensive, and this disadvantage grows greater as the proportion of use increases.

It has also been proposed to incorporate N-methylol-functional reactive groups in the amine copolymer so as to provide a self-curing cationic copolymer. This would then deem unnecessary the use of a curing coreactant such as the aminoplast resins normally used. Despite the obvious simplification and economy provided through the use of self-curing resins, these self-curing cationic systems have not been successful possibly because it has been difficult to combine the curing reactivity and bath stability which is needed to enable such a system to be successful.

Examples of prior efforts using self-curing copolymers are described in U.S. Patent Nos. 3,446,723, 3,454,482, 3,455,806 and 3,458,420.

It is stressed that high degrees of N-methylol functionality are required to cure the low molecular weight copolymers to the point where they possess good properties. On the other hand, the higher the degree of N-methylol functionality, the greater the tendency for undesirable prereaction during copolymerisation and storage in the aqueous acidic medium of the electrocoating bath. Furthermore if etherification is used to stabilise the N-methylol functional groups and prevent their prereaction, then these ether groups tend either to hydrolyse in the aqueous medium to cause prereaction, or the hydrolysis-

## COATING COMPOSITION FOR CATIONIC ELECTROCOATING FROM AQUEOUS BATH AND BATH FOR SAME

### TECHNICAL FIELD

This invention relates to a coating composition for cationic electrocoating from an aqueous bath comprising a cationic amine-functional copolymer mixture and an aminoplast resin, for example, one in which the copolymer is a solution copolymer of monoethylenically unsaturated monomers the amino groups of which are rendered cationic and water dispersible by a neutralisation of up to about 90% by a solubulising acid, and the resin comprises from 5 % to 30% based on the weight of the copolymer.

### BACKGROUND ART

Amine-functional copolymers which have been rendered cationic and water dispersible by neutralisation with a solubilising acid are known. The dispersed resin particles migrate to the cathode when a uni-directional electrical current is passed through the aqueous medium which contains the resin particles and these particles deposit upon the cathode to form a coating. The coated cathode is removed from the electrocoating bath and then baked to cure the coating.

Generally, the amine-functional copolymer contains reactive groups, such as hydroxy groups, and an aminoplast resin curing agent is incorporated in the bath for codeposition with the reactive amine copolymer. The aminoplast resin cross-links the copolymer when the coating is baked. Melamine-formaldehyde condensates have been used, but the corrosion resistance and detergent resistance have not been fully satisfactory. Benzoguanamine-formaldehyde resistant ether groups tend to prevent or reduce water dispersibility.

It is an object of the present invention to provide a coating composition which does not suffer from the above disadvantages but which can yield a corrosion and detergent resistant coating.

DISCLOSURE OF INVENTION

According to the invention, a coating composition for cationic electrocoating from an aqueous bath is characterised in that the copolymer comprises from 3% to 35% of a monomer having a basic amino group, from 20% to 35% of isobutoxymethyl acrylamide or methacrylamide, and 0% up to 15% of a monomer providing active hydrogen atoms coreactive with N-methylol functionality, the proportions being based on the weight of the copolymer, the balance of the copolymer comprising nonreactive monomers, and in that a water miscible organic solvent is employed to aid the solubilising acid.

Preferably the basic amino group of the unsaturated monomer contains from 3 to 20 carbon atoms. Preferably the monomer providing active hydrogen atoms coreactive with N-methylol functionality comprises from 1% to 10% of the copolymer. The copolymer may be used in admixture with from 5% - 30% of the weight of the copolymer of an aminoplast resin, or bisphenol-formaldehyde condensate.

The term "nonreactive" denotes the absence of functional groups, other than the single polymerisable unsaturated group, which will react under the contemplated conditions of polymerisation and cure.
Normally, this means that no other functional group
is present. Suitable nonreactive monomers are for
example styrene, vinyl toluene, $C_1$-$C_8$ alkyl esters
of monoethylenic acids, vinyl acetate, acrylonitrile,
and the like. Preferably, styrene and/or vinyl
toluene is combined with 2-ethylhexyl methacrylate
in amounts providing from 20 - 45% of styrene and/or
vinyl toluene to from 25 - 40% of 2-ethylhexyl
methacrylate. The use of such a proportion of
2-ethylhexyl methacrylate may improve the hydrolytic
stability of the bath and may help to allow the use
of less than 35% isobutoxymethyl acrylamide while
outstanding corrosion resistance may still be
achieved. It is surprising to be able to use such
large amounts of long chain esters and ethers in a
stable aqueous dispersion.

The amine-functional monomers which may be used
are known in themselves and are preferably amino alkyl
derivatives of a monoethylenically unsaturated
carboxylic acid or an amide thereof. Dimethyl aminoethyl
methacrylate is suitable, but any monoethylenically
unsaturated copolymerisable amine, be it primary,
secondary or tertiary, may be used, however, the
tertiary amines are preferred. Other suitable amine
monomers are for example dimethyl aminopropyl methacrylate, monomethyl aminoethyl methacrylate, aminoethyl
methacrylate, and the corresponding acrylates,
crotonates and the like. The amino amides are
particularly preferred, for example dimethyl aminopropyl methacrylamide.

The proportion of the amine monomer in the copolymer may be varied considerably, but a proportion of from 10% to 25% based on the weight of the copolymer is preferable.

Among the reactive monomers which may be present, preferably in an amount of from 1% to 10%, are amides, such as acrylamide, and hydroxy monomers, such as hydroxy alkyl acrylates and methacrylates in which the alkyl group normally contains from 2-4 carbon atoms. Preferably, the reactive monomer comprises a monoethylenically unsaturated carboxylic acid, such as acrylic acid, crotonic acid, itaconic acid, or methacrylic acid. Alternatively, fumaric acid or monoethyl fumarate may be used.

The curing process involves the removal of alcohol in a condensation reaction which thus consumes a large number of N-methylol groups. This condensation reaction may be catalysed by the presence of acid, but the acid groups used for solubilisation may be removed by the electrophoretic action which caused cationic electrodeposition. The presence of the carboxyl groups in the copolymer may catalyse this cure. At the same time, most of the acidity may be eliminated by the cure because of the high degree of N-methylol functionality which is present to consume the relatively small proportion of carboxyl functionality.

With ethers having less than four carbon atoms present in the isobutoxy ether, hydrolysis in the acidic electrocoating bath tends to provide N-methylol groups which tend to react slowly and may change the characteristics of the bath. The more N-methylol groups, the more the bath tends to change with time. On the other hand, other ether groups which may resist hydrolysis because they contain more than four carbon atoms may not be useful because these longer groups tend to be hydrophobic and may prevent satisfactory dispersion of the amine-functional copolymer with the aid of an acid. Thus more acid may be required and the bath pH may fall below 5.0 which creates corrosive conditions. Thus preferably, the bath pH is in the range of 6.0 to 7.0.

While the copolymer may consist essentially of monoethlenically unsaturated materials, polyethylenically unsaturated copolymerisable materials may also be present so long as they do not prevent the achievement of a solvent-soluble, nongelled copolymer.

The copolymerisation in organic solvent solution may be carried out in conventional fashion using a water miscible organic solvent, moderate heat, and a free radical-generating polymerisation catalyst such as azobisisobutyronitrile, benzoyl peroxide or cumene hydroperoxide. While chain termination using agents such as alkyl mercaptans can be used, such agents are preferably absent since the amine monomer is itself an inhibitor of the desired copolymerisation.

Preferably, the best copolymers are made slowly adding the materials to be copolymerised to a heel of the solvent containing a stoichiometric deficiency of the solubilising acid. This technique of providing the amine copolymer in partial salt form is described in the present Applicants' copending U.S. Application No. 14,101 filed Feb. 22, 1979. This incremental addition process is used in the example below, however, while it is preferable, it is not essential to the present invention.

Preferably, the acids for solubilising the amine copolymers are organic acids, such as acetic acid, glycollic acid, and, most preferably, dimethylol propionic acid. However, inorganic acids which do not damage the deposited film, such as phosphoric acid, may also be used. Acids which vaporise or decompose are most preferred since it is generally not preferable to have the solubilising acid present in the final cured coating. Neutralisation is preferably between 25% to 70%, including the acid which forms part of the copolymer.

The curing resin comprises preferably from 10 - 20% of the weight of the copolymer. The resins may be, for example benzoguanamine formaldehyde or bisphenol-formaldehyde condensates.

The invention also extends to a coating composition in accordance with the invention as a stable dispersion in water to provide an electrodeposition bath.

BEST MODE FOR CARRYING OUT THE INVENTION

The invention may be illustrated by the following example:

<u>Example</u>

| <u>Grams</u> | <u>Component</u> |
|------|------|
| 321 | 2-butoxy ethanol |
| 40 | Dimethylol propionic acid (to neutralise |
|     | amino monomer to about 50%) |

The above are charged to a reactor and heated to 95°C to form a heel of solution in which the polymerisation is carried out.

| 145 | Isobutoxymethyl acrylamide |
| 218 | Styrene |
| 191 | 2-ethyl hexyl methacrylate |
| 105 | Dimethyl aminopropyl methacrylamide |
| 12 | Azobisisobutyronitrile |

The above are premixed and added to the heel of acid-containing solvent slowly over a 3 hour period while maintaining the temperature at 90°C. When this addition is finished, most of the polymerisation has been completed. To insure completion of reaction, 2 grams of azobisisobutyronitrile is added and the temperature is maintained at 90°C for one hour, and this procedure is repeated one more time, at which point the conversion of monomer to polymer is complete. 15% by weight of benzoguamine-formaldehyde resin (XI 1123 from American Cyamanide) is added and then sufficient deionised water is added with rapid agitation to provide an aqueous bath which is a milky dispersion having a solids content of about 28% and having a pH of about 6.5.

Electrodeposition at the cathode after dilution with deionised water to 10% solids content proceeds well at 75 volts. The coated cathode is removed from the bath and cured by baking in an oven having a temperature of 350°F (177°C) or higher, the lower the baking temperature, the longer the time needed for cure. 400°F to 450°F (204°C to 232°C) for 30 to 15 minutes is a typical curing schedule. In this example coated panels were baked for 20 minutes at 400°F (204°C) and had excellent methyl ethyl ketone resistance and corrosion resistance. The bath was stable and retained its desirable characteristics on prolonged use.

10.

## CLAIMS

1.    A coating composition for cationic
electrocoating from an aqueous bath comprising a
cationic amine-functional copolymer mixture and an
aminoplast resin, the copolymer being a solution
copolymer of monoethylenically unsaturated monomers
the amine groups of which are rendered cationic and
water dispersible by a neutralisation of up to about
90% by a solubilising acid, the aminoplast resin
comprising from 5% to 30% based on the weight of the
copolymer, characterised in that the copolymer comprises
from 3% to 35% of a monomer having a basic amino group,
from 20% to 35% of isobutoxymethyl acrylamide or
methacrylamide, and from 0% up to 15% of a monomer
providing active hydrogen atoms coreactive with
N-methylol functionality, the proportions being based
on the weight of the copolymer, the balance of the
copolymer comprising nonreactive monomers, and in
that a water miscible organic solvent is employed to
aid the solubilising acid.

2.    A composition as claimed in Claim 1 characterised in that the monomer having a basic amino group
is a tertiary amine.

3.    A composition as claimed in Claim 2 characterised in that the monomer is a dimethyl amino alkyl
derivative of a monoethylenically unsaturated carboxylic
acid or an amide thereof.

4.  A composition as claimed in any of Claims 1 to 3 characterised in that the copolymer is neutralised in an amount of from 25% to 75% and the amine monomer is dimethyl aminopropyl methacrylamide.

5.  A composition as claimed in any of Claims 1 to 4 characterised in that the copolymer includes from 1% to 10% of a monoethylenically unsaturated carboxylic acid.

6.  A composition as claimed in any of Claims 1 to 5 characterised in that the nonreactive monomers comprise styrene and/or vinyl toluene in admixture with from 15% to 45% of 2-ethylhexyl methacrylate.

7.  A composition as claimed in Claim 7 characterised in that the amine monomer comprises from 10% to 25% and the styrene and/or vinyl toluene comprises from 20% to 45%.

8.  A composition as claimed in any of Claims 1 to 7 characterised in that the aminoplast resin is a benzoguanamine-formaldehyde condensate.

9.  A composition as claimed in Claims 1 to 8 characterised in that the aminoplast resin comprises from 10% to 20% of the weight of the copolymer.

10.  A composition as claimed in any of Claims 1 to 9 characterised in that the copolymer is present as a stable dispersion in water to provide a bath having a pH in excess of pH 5.0.

11.  A composition providing a water dispersion as claimed in Claim 10 characterised in that the water dispersion has a pH in the range of pH 6.0 - 7.0.

KILBURN & STRODE
Chartered Patent Agents
Agents for the Applicants

European Patent Office

**EUROPEAN SEARCH REPORT**

Application number

EP 80 30 3603

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| X | GB – A – 1 159 812 (BASF)<br><br>* Page 5, lines 8-41; page 2, lines 66-74; page 2, lines 91-102; page 3, lines 30-42; page 3, lines 96-99; page 3, lines 113-116 *<br><br>--- | 1-4, 6,7, 10,11 | C 09 D  5/40<br>C 25 D 13/06 |
| A | US – A – 4 129 544 (JOHN D. CRAIG)<br><br>* Abstract *<br><br>--- | 1 | |
| A | US – A – 3 853 803 (CARL C.<br>ANDERSON)<br><br>* Abstract; column 6, lines 18-30 *<br><br>----- | 1-3, 5,8,9 | TECHNICAL FIELDS SEARCHED (Int Cl.³)<br><br>C 09 D  5/40<br>C 09 D  3/81 |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family.

corresponding document

| | | |
|---|---|---|
| The present search report has been drawn up for all claims | | |
| Place of search<br>The Hague | Date of completion of the search<br>22-01-1981 | Examiner<br>GIRARD |

EPO Form 1503.1  06.78